# EUROPEAN PATENT APPLICATION

(11) **EP 4 617 645 A1**
(43) Date of publication of application: **17.09.2025**
(21) Application number: 25158541.0
(22) Date of filing: 18.02.2025
(51) Int. Cl.: G01N 21/89, B29C 65/00, G01N 21/95

(54) **METHOD AND SYSTEM FOR DETECTING ANOMALIES IN A PACKAGING WEB, PACKAGING MACHINE AND COMPUTER PROGRAM PRODUCT THEREOF**

(30) Priority: 14.03.2024 IT 202400005731
(71) Applicant: Tetra Laval Holdings & Finance S.A., 1009 Pully (CH)
(72) Inventor: Scarabelli, Paolo, 41123 MODENA (IT); Melandri, Antonio, 41123 MODENA (IT); Piccinini, Giorgio, 41123 MODENA (IT)
(74) Representative: Tetra Pak Patent Attorneys

(57) **Abstract**

Method for detecting splices **(400)** in a packaging web **(101)** advancing along an advancement path **(FD);** the method comprising: capturing (**S300**), by an artificial vision system **(102),** images of the packaging web (101) as it advances along the advancement path **(FD);** processing **(S301),** by electronic processing resources **(104)** communicatively connected to the artificial vision system **(102),** the captured images to determine the occurrence of a splice **(400)** in the packaging web **(101);** and outputting (**S302**) data comprising information indicative of whether the splice **(400)** in the packaging web **(101)** advancing along the advancement path **(FD)** is present.

## Description

### TECHNICAL FIELD OF THE INVENTION

The invention relates generally to packaging technology. More particularly, the present invention relates to systems and methods for detecting anomalies in a packaging web, as well as packaging machines and computer program products thereof.

### STATE OF THE ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic^{®}, which is made by sealing and folding a laminated packaging material.

The packaging material has a multilayer sheet structure substantially comprising one or more stiffening and strengthening base layers typically made of a fibrous material, *e.g.* paper or cardboard, or mineral-filled polypropylene material, covered on both sides with one or more heat-seal plastic material layers, *e.g.* polyethylene film. In the case of aseptic packages for long-storage products, such as UHT milk, the packaging material also comprises a gas- and light-barrier material layer, *e.g.* aluminum foil or ethyl vinyl alcohol (EVOH) film, which is superimposed on a heat-seal plastic material layer, and is in turn covered with another heat-seal plastic material layer forming the inner face of the package eventually contacting food product.

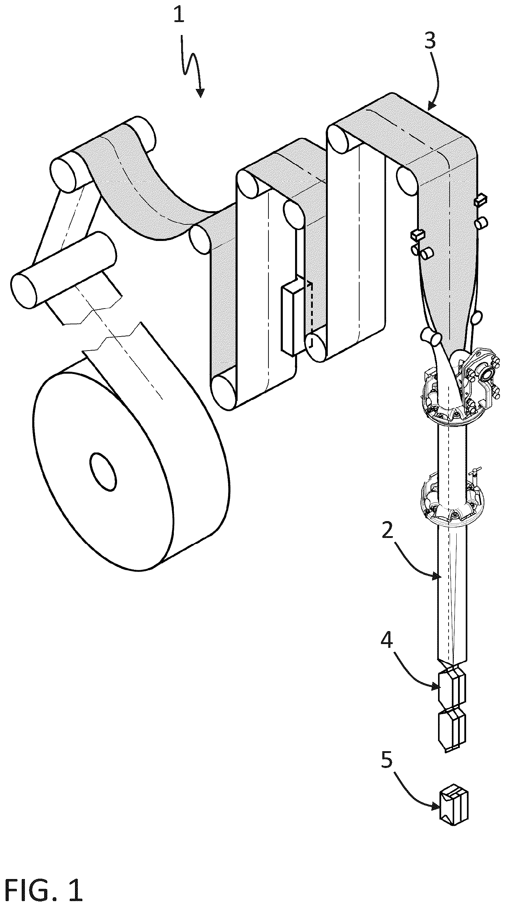

Packages of this type are normally produced on fully automatic packaging machines, also known as packaging or filling machines, of the type shown in Figure 1 as a nonlimiting example and referenced as a whole with reference numeral 1, where a continuous vertical tube 2 is formed from a packaging material or web **3,** which is sterilized by applying, *e.g.* a chemical sterilizing agent such as a hydrogen peroxide solution, or physical sterilization, such as by means of an electron beam. Once sterilization is completed, any residue, in particular left by the chemical sterilizing agent, is removed, *e.g*. evaporated by heating, from the surfaces of the packaging web **3.** The packaging web **3** is maintained in a closed, sterile environment, in particular within an isolation chamber, and is folded and then heat-sealed longitudinally to form the vertical tube **2.**

The vertical tube **2** is filled with a sterilized or sterile-processed pourable food product by means of a filling pipe extending inside the vertical tube **2.** The vertical tube **2** is advanced along a vertical advancing direction to a forming station, where it is gripped along equally spaced transversal sections by a jaw system including two or more pairs of jaws acting cyclically and successively on the vertical tube **2** to form a continuous sequence of packs, here pillow packs, **4** connected to one another by transverse sealing bands. The packs **4** are then separated from one another by cutting the sealing bands and are conveyed to a folding station, where they are folded mechanically into finished, *e.g.* substantially parallelepiped-shaped, packages or food packages **5.**

To prevent the longitudinal edges or borders of the packaging web **3,** in particular the fibrous material in the multilayer sheet structure of the packaging web **3** exposed to the external environment, from coming into contact with and absorbing the pourable food product in the vertical tube **2** first and in the packs **4** then, prior to folding and longitudinally sealing the packaging web **3** to form the vertical tube **2,** the longitudinal edges of the packaging web **3** are fluidly isolated by heat-sealing a web-fed sealing strip **6** of heat-seal plastic material to the packaging web **3** at a heat-sealing station.

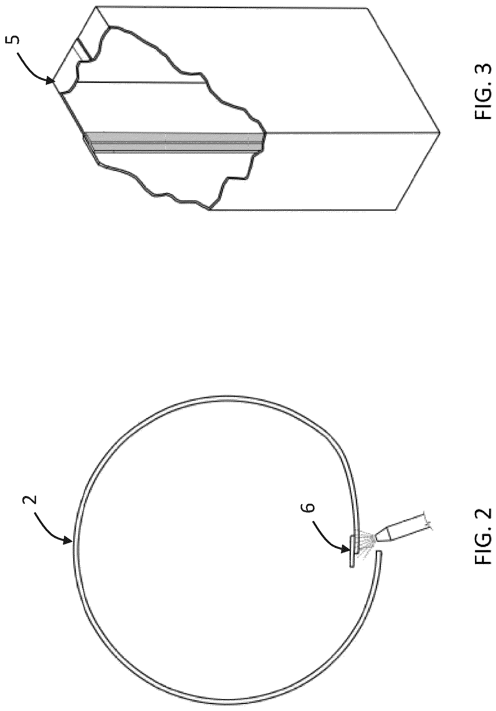

Referring to Figure 2, the sealing strip **6** is flat and a first longitudinal side portion thereof is first heat-sealed to an inner face of a longitudinal side portion of the packaging web **3,** which is then folded so as to bring the opposite longitudinal edges thereof in contact, and then the remaining (loose) longitudinal portion of the sealing strip **6** that projects from the longitudinal edge of the packaging web **3** and is not heat-sealed thereto is heat-sealed to the inner face of the opposite longitudinal side portion of the packaging web **3.** In this case, the heat-sealing of the sealing strip **6** to the opposite longitudinal side portion of the packaging web **3** results in the packaging web **3** being also longitudinally heat-sealed to form the vertical tube **2.** The package **5** shown in Figure 3 is then formed as described above.

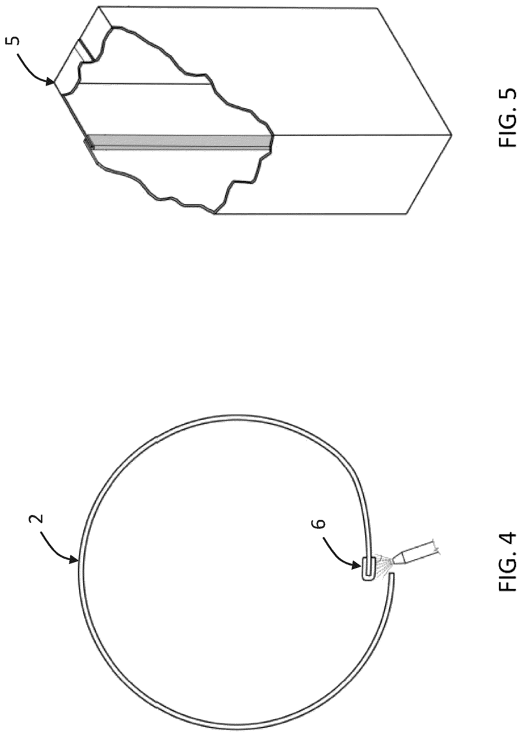

In a different embodiment shown in Figure 4, the sealing strip **6** is U- or C-shaped and the package **5** shown in Figure 5 is formed.

In order to heat-seal the U-shaped sealing strip **6** to the packaging web **3,** the packaging web **3** and the sealing strip **6** are first web-fed to a heat-sealing station, where they are heated by a first heating unit and then advanced to a first pressure roller that pressure-seals a first longitudinal side portion of the sealing strip **6** onto either the inner or the outer (or décor) face of a longitudinal (narrow) side portion of the packaging web **3,** that, after the vertical tube **2** has been formed, remains arranged inside the vertical tube **2,** and leaving a second (loose) longitudinal portion of the sealing strip **6** projecting from the longitudinal edge of the packaging web **3.**

The packaging web **3** and the sealing strip **6** are then advanced to a second heating unit, where the second longitudinal portion of the sealing strip **6** that projects from the first longitudinal side portion of the packaging web **3** and is not heat-sealed to the packaging web **3** is heated, along with the opposite face of the longitudinal side portion of the packaging web **3** to that to which the first longitudinal side portion of the sealing strip **6** has been heat-sealed.

The packaging web **3** and the sealing strip **6** are then advanced to a U-folding unit, where the second longitudinal portion of the sealing strip **6** is first U-folded around the longitudinal edge of the packaging web **3** and then pressure-sealed to the opposite face of the longitudinal side portion of the packaging web **3** by a second pressure roller (not shown).

Resultingly, while the first and second longitudinal portion of the sealing strip **6** are heat-sealed the packaging web **3,** the longitudinal central portion of the sealing strip **6** is not heat-sealed to the packaging web **3** and forms a loop that develops around, and fluidly isolate, the longitudinal edge of the packaging web **3** that, after the vertical tube **2** has been formed, remains arranged inside the vertical tube **2.**

Referring to the packaging machine **1** of Figure 1, it is also known that, when the packaging web **3** of a reel is about to end, techniques for ensuring that packaging web **3** is continuously fed to the packaging machine **1** to continuously produce food packages have been developed. For instance, packaging machines **1** are provided with dedicated stages, also called automatic splicing units, having a second reel of packaging web **3** to be fed for forming food packages; upon reaching the end of the first reel, the packaging web **3** of the first reel is cut and subsequently sealed, in particular heat-sealed by heat-sealing means such as heated bars, to the packaging web **3** of the second reel, which has been properly prepared (namely, cut) in view of the sealing with the packaging web **3** of the first reel, thereby forming the so-called splice, *i.e.* a portion of the packaging web **3** wherein the packaging webs **3** of the first and second reel are heat-sealed to each other to form a single packaging web **3** to be fed to form the packages **4.** In this way, it is possible to avoid stopping the packaging machine from working, thereby ensuring a continuous operation of the same for forming packages **4.**

According to further examples, a further splice can be formed at dedicated converting factories (not shown) which directly provide the packaging webs **3** with splice(s).

### OBJECT AND SUMMARY OF THE INVENTION

The Applicant has noted that, within the food industry, one of the aims of food package technology is ensuring food safety, especially for packages as the ones discussed above; in fact, while the packaging materials or packaging webs used in the food package can be designed to provide strength and stability, in order to avoid that the packages are damaged during transportation, it is also of great importance to provide for packaging materials that allow to form a protective environment for the food product so that it is protected from for example bacteria, germs, oxygen and sun light, thus prolonging shelf life.

Inconveniences have been observed with such roll-fed packaging machines. In fact, defects in the packaging web, for example arising from anomalies in the sealing of the sealing strips or when forming the splice (*i.e.* anomalies arising during the heat-sealing of the packaging webs from the reels to be sealed together, *e.g*. due to unexpected excessive temperature/pressure of the heat-sealing means and/or misalignments of the packaging webs of the reels to be sealed together), may lead to defects both in the packaging web itself or on the strip, *e.g*. wrinkles or scratches, *etc*.

Thus, a desire is felt in the sector to provide for and optimize systems and methods for reliably monitoring packaging webs and preventing the formation of food packages that may exhibit anomalies.

The aim of the present invention is hence to develop systems and methods for detecting anomalies in a packaging web, in particular in a packaging machine during normal operation, *i.e.* production, thereby solving at least part of the abovementioned inconveniences.

This aim is achieved by the present invention, that relates to a method and a system for detecting anomalies in a packaging web, as well as a packaging machine and a computer program product thereof, as claimed in the appended claims.

### BRIEF DESCRIPTION OF THE DRAWINGS

Figure 1 shows a perspective view, with parts removed for clarity, of a packaging machine operable to produce sealed packages containing pourable food products from a tube of packaging material or packaging web.
Figures 2 and 3 schematically show the heat-sealing of a tape sealing strip to a packaging web and the resulting sealed package, respectively.
Figures 4 and 5 schematically show the heat-sealing of a U-shaped sealing strip to a packaging web and the resulting sealed package, respectively.
Figure 6 schematically shows a system for detecting anomalies in a packaging web according to the present invention.
Figure 7 schematically shows a packaging system, an artificial vision system of the system of Figure 1 and light sources for quality assessing the packaging web.
Figure 8 schematically shows a flowchart illustrating a method detecting anomalies in a packaging web according to the present invention.
Figures 9-19 show images captured by an artificial vision system of the system of Figure 1.

### DETAILED DESCRIPTION OF THE INVENTION

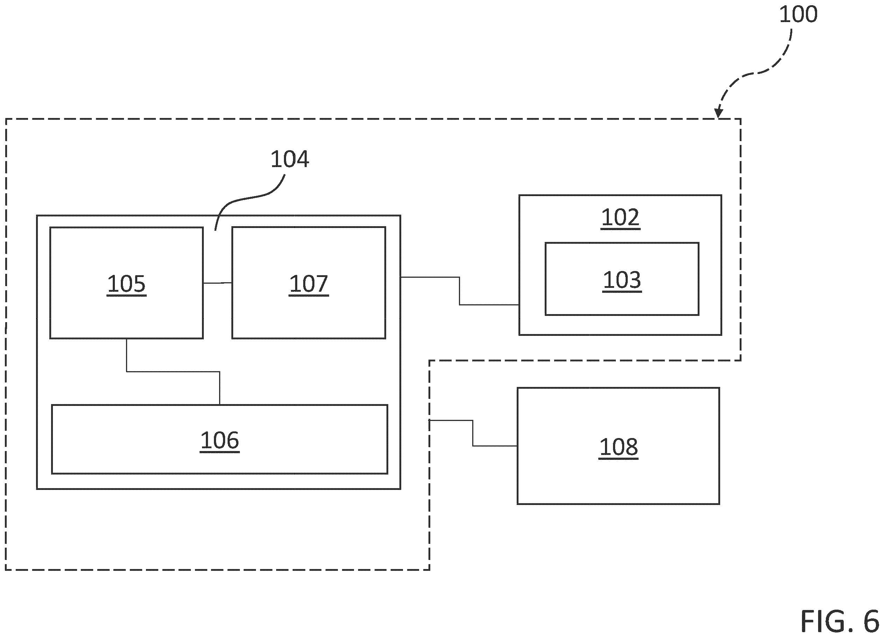

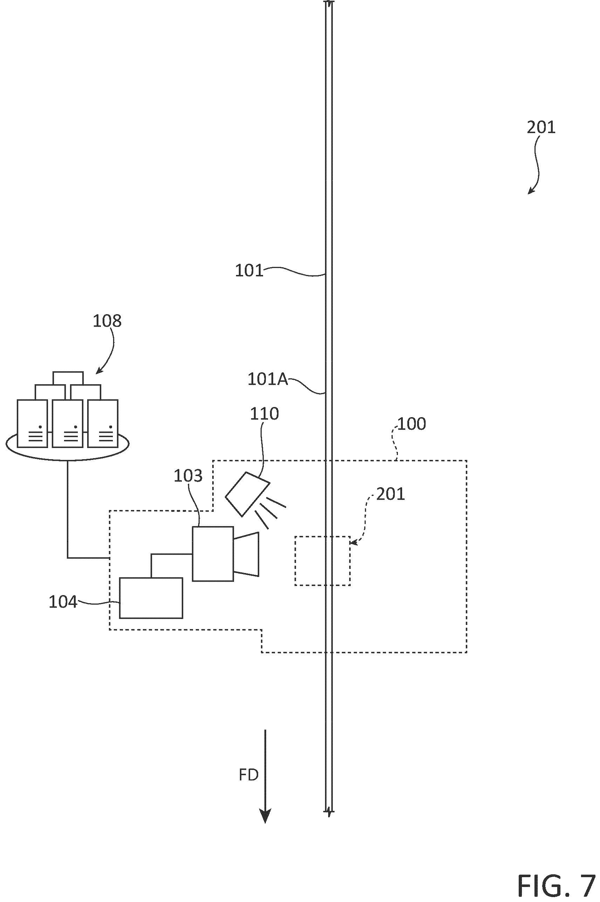

Figure 6 shows a system **100** for detecting anomalies, in particular splices, in a packaging web **101** (shown in Figure 7) advancing along an advancement path defined by a feeding direction **FD;** in particular, the system **100** comprises an artificial vision system **102** operable to capture images of the packaging web **101,** in particular as it advances along the advancement path **FD.** In further detail, with reference to Figures 6 and 7, the artificial vision system **102** comprises a camera **103** with an integrated polarizer (*e.g*., a Triton polarization camera with Sony's IMX264MZR/MYR polarized CMOS sensors) configured to acquire or capture polarized images of the packaging web **101.** According to a further aspect of the present invention, not described in detail hereinafter, the artificial vision system **102** also comprises respective electronic processing resources (not shown), integrated therein. In particular, multiple images may be acquired simultaneously by the vision system **102** of the same portion of the packaging web **101;** in addition, the camera **103** with the integrated polarizer is configured to capture a plurality of polarized images, in particular each captured according to a corresponding polarization angle. According to a preferred embodiment of the present invention, the camera **103** with the integrated polarizer is configured to capture four polarized images; for example, the polarization angles are 0°, 45°, 90° and 135°. Therefore, the present camera **103** with the integrated polarizer allows to simultaneously capture images at different polarization angles of the packaging web **101** advancing in a packaging system or packaging machine **200** of Figure 7, thereby allowing monitoring of the packaging web **101** while the latter moves in the packaging machine **200** and, consequently, precisely monitoring the quality of the packaging web **101.**

The system **100** further comprises electronic processing resources **104** communicatively connected to the artificial vision system **102.** According to an aspect of the present invention, the electronic processing resources **104** are of a local type, *e.g*. they are implemented as a local unit; according to a further and alternative aspect of the present invention, electronic processing resources **104** are of a distributed type, *e.g.*, on nodes in a network, and implementing paradigms such as cloud computing. Without it limiting to the present invention, the electronic processing resources **104** are hereinafter of the local type. As shown in Figure 6, the electronic processing resources **104** comprise:
- an electronic control unit **105;**
- a memory **106** connected to the electronic control unit **105** and configured to store data outputted by the electronic control unit **105;** and
- a transceiver **107** connected to the electronic control unit **105** and configured to receive data from the artificial vision system **102** and/or from a (remote) server **108,** the latter communicatively connected to the system **100,** in particular the electronic processing resources **104,** and transmit such data to the electronic control unit **105** and/or to the server **108.**

According to a further aspect of the present invention, not described in detail hereinafter, the server **108** is configured to process data transmitted by the electronic processing resources **104.**

Furthermore, according to a further aspect of the present invention, the server **108** is communicatively connected to the artificial vision system **102** to transmit data and/or notifications therein.

According to a further aspect of the present invention, the server **108** is connected, in particular communicatively coupled, to several systems **100,** more in particular artificial vision systems **102;** in this way, it is possible to collect data from a large base of artificial vision systems **102,** which can, in turn, be used as a basis for classification models, such as neural networks, for generating associations between the captured images and anomalies, and also links between anomalies and actions.

With reference to Figure 7, the system **100** further comprises a light source 110 arranged at a side or surface **101A** of the packaging web **101** and configured to illuminate the side **101A** of packaging web **101;** here, the artificial vision system **102** is arranged at the side **101A** of the packaging web **101** so as to capture the light, either reflected or transmitted, from the packaging web **101.**

The artificial vision system **102** is arranged so that it is able to allow monitoring of a certain portion of the packaging web **101,** hereinafter referred to as portion **201;** thus, the light source **110** is placed so that the emitted light is directed in particular towards the portion **201.** In other words, in the context of the present invention, the term "portion" refers to the area of the packaging web **101** observed by the artificial vision system **102,** regardless of the fact that the packaging web **101** advances along the feeding direction **FD.**

According to a preferred embodiment of the present invention, the light source **110** is a polarized light source.

Referring to Figure 7, a portion of the packaging system or machine **200,** sometimes referred also as filling machine, is schematically shown; in the following, it is assumed that the portion of the packaging machine **200** shown in Figure 7 is the one before the formation of the packages from the packaging web **101,** *i.e.* the stages before the formation of a vertical tube (not shown) for forming the packs and the following packages. According to an aspect of the invention, the packaging web **101** is provided to the packaging machine **200** on a reel (not shown), *i.e.* the packaging web **101** is roll-fed. After being unwound from the reel, the packaging web **101** is fed along a feeding direction **FD** to the artificial vision system **102** and the light source **110,** arranged at the side **101A** of the packaging web **101,** so that the packaging web **101** moves towards the portion **201** and, consequently, the artificial vision system **102** is able to capture images of the portion **201,** *i.e.* images of the packaging web **101** passing in the region monitored by the artificial vision system **102.**

The Applicant notes that, by illuminating the packaging web **101** with at least one light source, *e.g*. the light source **110,** and thereafter capturing images with the artificial vision system **102,** it is possible to output data from which it is possible to reliably detect anomalies in the packaging web **101.** In further detail, by having a dedicated light source **110** that may be controlled both in terms of light properties, such as frequency, as well as placement with respect to the artificial vision system **102,** a risk of overlooking defects in the packaging web **101** can be reduced. For instance, the light source **110** and the artificial vision system **102** are arranged such that reflections do not occur, which provides for that detection, in particular edge detection, of the packaging web **101** can be more accurate. As an effect, it is possible to reliably discard packages with non-negligible defects in the longitudinal and/or transverse sealing of the packages due to defects in the packaging web **101,** in particular at the splice, and/or to use the detected anomalies for adjusting settings for the formation of the splice, for example the temperature used for heating the heat-sealing means and/or the pressure to be applied to perform the heat-sealing for forming the splice, as well as the settings for forming the splice through induction heating.

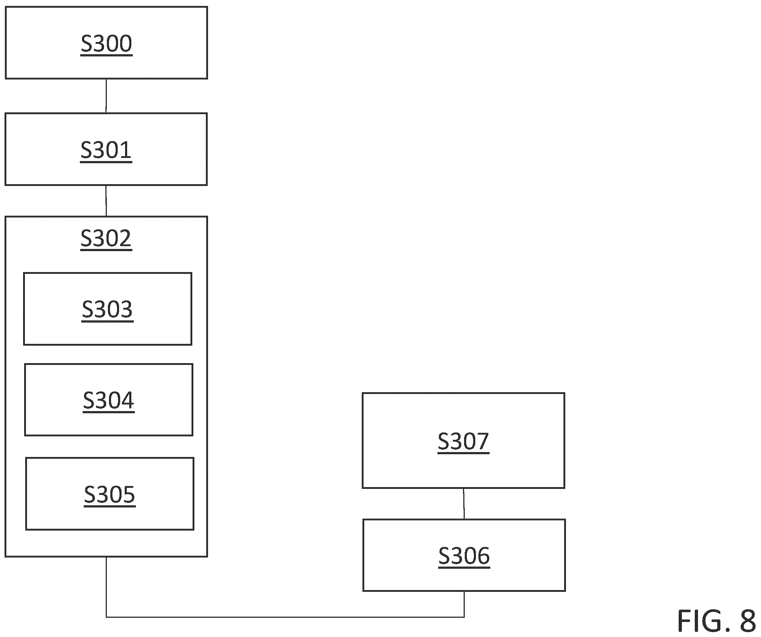

Referring to Figure 8, a method for detecting anomalies in the packaging web **101,** in particular implemented by means of the abovementioned system **100,** is described hereinafter. In particular, the method comprises:
- capturing **S300,** by the artificial vision system **102,** images of the packaging web **101** as it advances along the feeding direction **FD;**
- processing **S301,** by means of the electronic processing resources **104,** the captured images outputted by the artificial vision system **102** to determine the occurrence of any anomaly, preferably one or more splices, in the packaging web **101;** and
- outputting **S302,** by means of the electronic processing resources **104,** data comprising information indicative of whether any anomaly in the packaging web **101** advancing along the feeding direction **FD** is present.

As referred herein, a splice refers to a joining portion between two different webs of packaging material. In particular, the splice is typically obtained by cutting and securely attaching the two different webs together.

In particular, the step of capturing **S300** comprises capturing polarized images of the packaging web **101** by the camera **103** with an integrated polarizer. As also anticipated above, the camera **103** with an integrated polarizer is configured to capture a plurality of polarized images, each of which according to a respective polarization angle, thereby allowing monitoring of the packaging web **101** even when the latter is being continuously fed along the feeding direction **FD.**

Furthermore, according to an aspect of the present invention, the step of capturing **S300** further comprises illuminating the side **101A** of the packaging web **101** by the light source **110.**

Possible anomalies in the packaging web **101,** in addition to the splice, may relate to defects arising from incorrect procedures, such as errors in forming the splice, or defects in the packaging web **101** itself. Without it being limiting to the present invention, possible anomalies comprise:
- marks or patterns representative of typical coarser, major or macro defects or anomalies, such as scratches; and
- marks or patterns representative of typical finer, minor or micro defects or anomalies, such as particular wrinkles.

In particular, the following types of wrinkles can be detected:
- diagonal wrinkles, in particular wrinkles inclined by about 45° relative to the longitudinal edge of the packaging web **102** or the sealing strip attached to the packaging web **102,** in particular the longitudinal edge of the longitudinal side portion of the sealing strip heat-sealed to the packaging web **101;** and
- substantially orthogonal wrinkles, hereinafter referred to as transversal wrinkles, in particular wrinkles inclined by about 90° relative to the longitudinal edge of the sealing strip or of the packaging web **102,** in particular the longitudinal edge of the longitudinal side portion of the sealing strip heat-sealed to the packaging web **101.**

According to a further aspect of the present invention, the step of processing **S301**comprises the step of determining, by the electronic processing resources **104,** the occurrence of an anomaly, *e.g*. a splice, by comparing the captured images with reference images showing packaging web **101** free of any kind of manipulation, *e.g*. due to folding and/or sealing the packaging web **101.**

According to an aspect of the present invention, the step of processing **S301** comprises the step of executing, by the electronic processing resources **104,** an algorithm, *e.g*. Degree of Polarisation (DoLP) or Angle of Polarisation (AoLP) algorithms, so that the captured images are processed in order to determine one or more quantities, *e.g.* DoLP or AoLP, related to each pixel of the captured images. In particular, it is noted that each pixel of the captured images comprises four respective sub-pixels, each having a respective angle of polarization; therefore, the abovementioned algorithms are configured to make the electronic processing resources **104** determine the abovementioned quantities on the basis of the information contained in each sub-pixel. In other words, the electronic processing resources **104** are configured to extract information from the captured images relating to the behavior of the light received by the artificial vision system **104,** thereby obtaining information on the presence of possible anomalies in the packaging web **101** based on the extracted information.

According to a further aspect of the present invention, the step of processing **S301** comprises the step of applying, by the electronic processing resources **104,** a classification model to the captured images thereby classifying them according to one or more classes, preferably indicative of the presence or the absence of a splice and/or a quality thereof, *e.g.* if the splice is done correctly, not correctly or partially correctly. In the latter case, the classification model may classify the type of anomaly in the splice for further analysis. In addition or alternatively, the abovementioned classes may comprise the presence or absence of anomaly and/or to the type of other anomalies (*i.e.,* wrinkles, scratches, *etc.*)*.* Thus, if a splice in the packaging web **101** is determined to be present in the captured images, the method further comprises outputting **S304,** by the electronic processing resources **104,** data relative to the position of the splice in the packaging web **101.**

The classification model is obtained after training a dedicated algorithm, loaded in and executable by the electronic processing resource **104,** on a set of training images, the latter being a database of images captured by one or more artificial vision systems and/or images stored in and accessible from an external storage (*e.g*. in the server **108**); for instance, the set of training images comprise images of packaging webs **101** with or without anomalies. Furthermore, in case the algorithm is trained in a supervised manner, each image of the set of training images is associated with respective labels, the latter being related to the presence/absence of anomalies and/or the type of anomaly. Thus, electronic processing resource **104** are configured to obtain the classification model by:
- providing a number of images from the set of training images with the associated labels to the algorithm in order for the latter to classify each image and, thus, determine a classification model;
- classifying the remaining images of the set of training images by means of the classification model, the remaining images being provided without the respective labels;
- evaluating the accuracy of the classification model on the basis of the classification operated by the algorithm and the labels associated with the remaining images; and
- refining the classification model on the basis of the calculated accuracy, *i.e.* re-training the classification model on the basis of the calculated accuracy.

The step of outputting **S302** further comprises generating **S303,** by the electronic processing resources **104,** in particular by the electronic control unit **105,** a notification comprising information indicative whether any anomaly, here the splice, in the packaging web **101** is present. In particular, the notification refers to the presence and conveniently the type of any anomaly, here the splice, determined to be present in the packaging web **101** and/or information relating to a position of the splice in the packaging web **101;** in other words, the system **100** is designed to allow a user to discern both if the packaging web **101** presents an anomaly that may hinder the safety and quality of the package to be formed and if the packaging web **101** is well suited for forming packages respecting quality requirements, *i.e.* if no anomaly is detected. In particular, according to an aspect of the present invention, the notification is periodically sent to, *e.g.*, a user terminal to inform the user of whether an anomaly is present and, if present and if provided for, the type of it; in particular, the notification is in the form of a text and is conveniently associated with a corresponding sound to draw the attention of the user when receiving the notification.

According to a further aspect of the present invention, the step of outputting **S302** further comprises outputting **S305** an identifier or package ID, for example a QR code or a Data Matrix associated with a package to be formed, in particular received by the electronic processing resources **104;** thus, the notification to be outputted also comprises the identifier. An advantage with having a package identifier is that the anomaly detected in the packaging web **101** to be used to form a certain package may be linked to the package identifier such that the package can be discarded once this is produced; in this way, the downtime of the packaging system **200** can be reduced, thereby obtaining less food waste as well as less production costs.

According to a further aspect of the present invention, the step of processing **S301** further comprises determining one or more quantities relating to the packaging web **101,** in particular one or more geometric quantities (for example, the splice overlap, the splice sideways alignment, the spliced package length, the splice parallelism on the side where the sealing strip is located, the splice parallelism on the longitudinal side and the position of the splice in a related reference system, for example a Cartesian reference system XYZ) relating to the splice formed in the packaging web **101,** based on the images captured by the artificial vision system **102.** Therefore, the step of outputting **S302** further comprises outputting the one or more quantities relating to the packaging web **101;** according to an aspect of the present invention, the one or more quantities relating to the packaging web **101** are comprised in the notification generated by the electronic processing resources **104** during the step of generating **S303,** by the electronic processing resources **104,** in particular by the electronic control unit **105,** a notification. Thus, for example, the system **100** allows a user to verify the misalignment of the splice of the packaging web **101.**

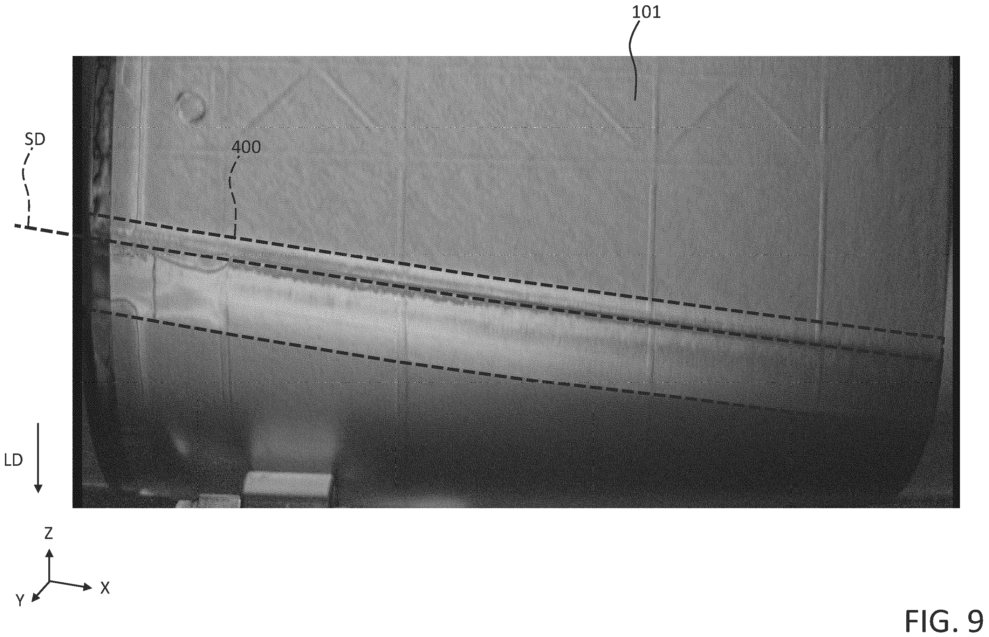

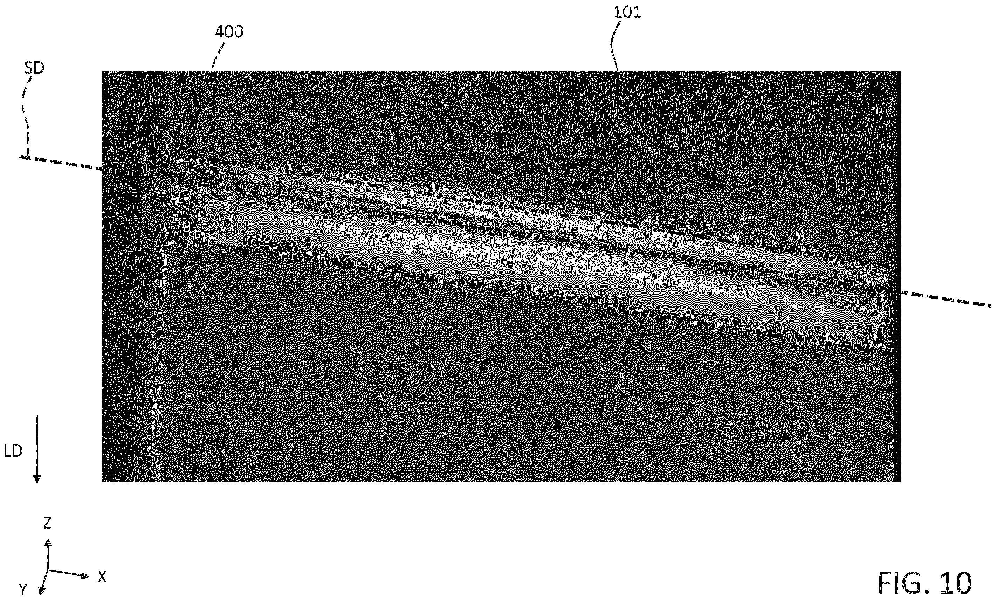

Preferably, the method comprises capturing images of an entire width of the packaging web **101,** wherein the width extends along a direction **SD,** shown in Figure 9 and 10, transverse to the longitudinal edge of the packaging web **101.**

According to an aspect of the present invention, the step of processing **S301** further comprises verifying that the one or more quantities relating to the packaging web **101** satisfy a corresponding proprietary criterion, here if the one or more geometric quantities relating to the splice formed in the packaging web 101 satisfy corresponding criterions, *e.g*. if the one or more geometric quantities are within respective confidentiality ranges. In particular, according to an embodiment of the present invention, the abovementioned verifying step is performed automatically by the system 100 and the step of outputting **S302** further comprises outputting the result of such verification, *e.g*. a notification comprising information on whether one or more of the one or more quantities relating to the packaging web **101** satisfy the corresponding proprietary criterion, *i.e.* if one or more of the one or more geometric quantities are within the corresponding confidentiality range. According to another embodiment of the present invention, the step of verifying that the one or more quantities relating to the packaging web **101** satisfy a corresponding proprietary criterion comprises generating a notification for a user to allow inspection of the packaging web **101,** in particular of the splice, to determine if the one or more quantities satisfy the corresponding proprietary criterion; in other words, in this case, the system **100** prompts a user to conduct such verification.

The method further comprises:
- storing **S306,** by the electronic processing resources **104,** in particular the memory **106,** the captured images; and
- transmit **S307,** by the electronic processing resources **104,** in particular by the transceiver **107,** the captured images to the server **108.**

It is furthermore noted that, according to an aspect of the present invention, the present system **100** allows to evaluate the development of anomalies over time, namely for determining actions to be performed. For instance, a minor deviation may in itself not be considered severe enough to render a mitigating action; however, in case the deviation is worsening over time, such mitigating action may still be instigated in case the development is suggesting that the anomaly is successively becoming worse.

According to an embodiment of the present invention, the development of anomalies over time is monitored by the system **100** for example through the implementation of the machine learning algorithm; according to a different embodiment of the present invention, anticipated above, the abovementioned development of anomalies over time is monitored by comparing the polarized images relating to portion **201** acquired by the artificial vision system **102** and images of the packaging web **101** acquired before the latter has been manipulated.

Independently from how the monitoring of the development of anomalies over time is conducted, the system **100** is configured to generate a corresponding notification, according to modalities similar to the ones described in the previous paragraphs, to inform a user at least of the presence of an anomaly. Figures 9-19 exemplarily show polarized images, in particular of portion **201** of the packaging web **101,** captured by the polarized camera **103** of the artificial vision system **102** and processed by the electronic processing resources **104** by means of respective algorithms, loaded in and executable by the same electronic processing resources **104.**

In particular, Figures 9 and 10 exemplarily show respective polarized images, in different lighting conditions and, thus, with different contrasts, of portion **201** of the packaging web **101,** in particular of the side **101A** of the latter, wherein the splice (referred to with the reference number **400** and extending along the direction **SD** transverse to the longitudinal edge of the packaging web **101,** *i.e.* transverse to a side **101C** of the packaging web **101** extending along a longitudinal direction **LD,** here parallel to a Z axis of a Cartesian reference system XYZ) is shown; in particular, the polarized images have been processed by means of a DoLP algorithm, *i.e*. the electronic processing resources **104** are configured to extract the degree of polarisation from each pixel, and, in particular each sub-pixel, of the captured images. It is noted that the abovementioned captured and processed images provide information on the light captured by the polarized camera **103** and, thus, on the quality of the sealing for forming the splice **400,** *i.e.* on the settings used for heat-sealing the packaging webs from different reels, namely the temperature used for sealing them as well as the relative pressure (light areas).

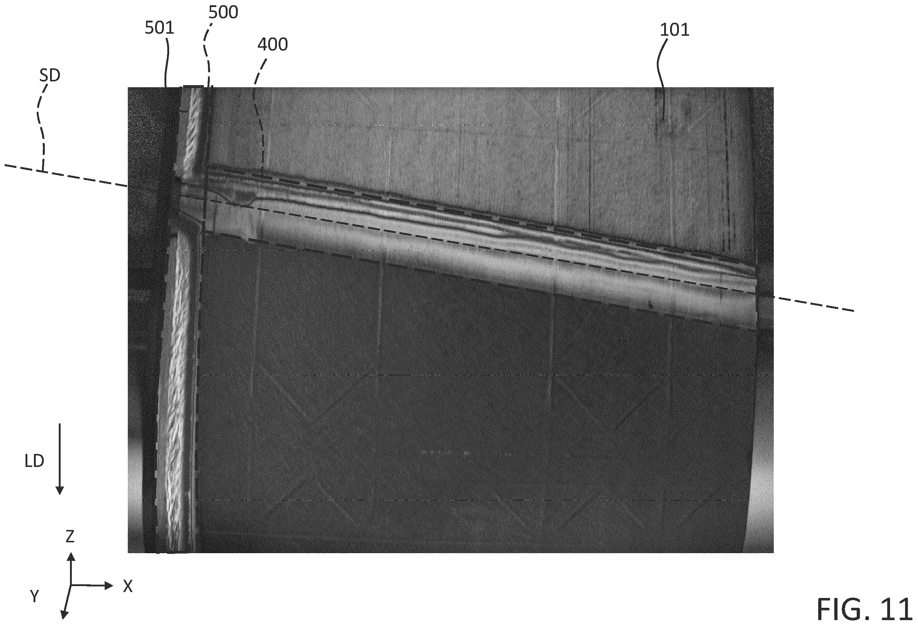

Figure 11 exemplarily shows a polarized image of portion **201** of the packaging web **101** wherein the splice **400** and a sealing strip **501** extending on a longitudinal side portion **500** of the packaging web **101** are shown; in particular, the sealing strip **501** and, thus, the longitudinal side portion **500** extend along the longitudinal direction **LD.** Furthermore, the polarized image has been processed by means of a DoLP algorithm. It is noted that the abovementioned captured and processed image provide information on the light captured by the polarized camera **103** and, thus, on the quality of the sealing for forming the splice **400,** *i.e.* on the settings used for heat-sealing the packaging webs from different reels, as well as the quality of the sealing of the sealing strip **501,** *i.e.* on the settings used for heat-sealing the sealing strip **501** to the packaging web **101.**

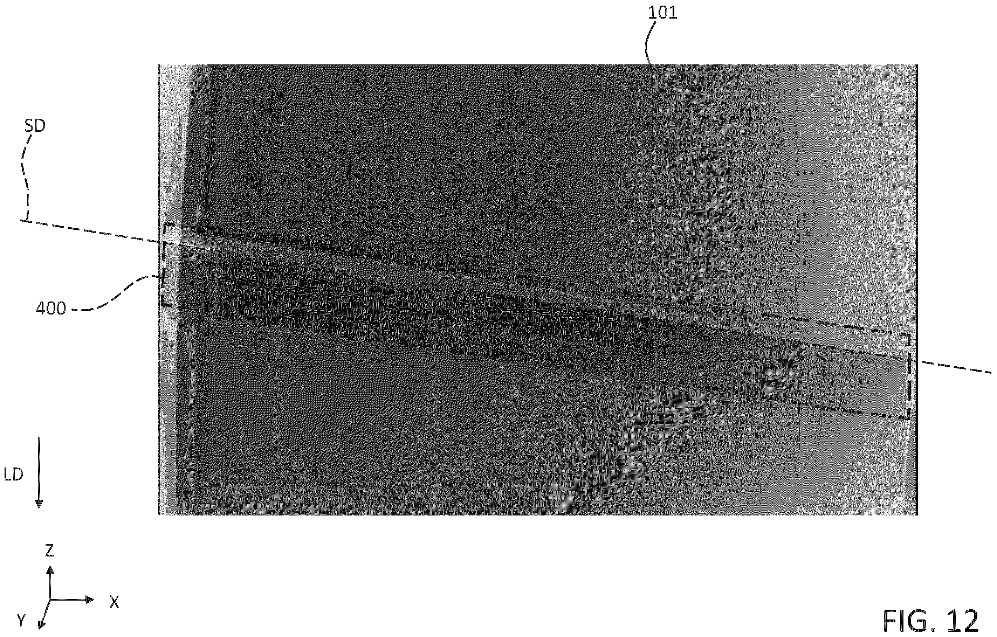

Figure 12 exemplarily shows a polarized image of portion **201** of the packaging web **101** wherein the splice **400** is shown. In this case, the polarized image has been processed by means of a AoLP algorithm, *i.e*. the electronic processing resources **104** are configured to extract the angle of polarisation from each pixel, and, in particular, each sub-pixel, of the captured image, thereby conveying, similarly to what has been described with reference to Figures 9-11, information on the quality of the sealing for forming the splice **400.**

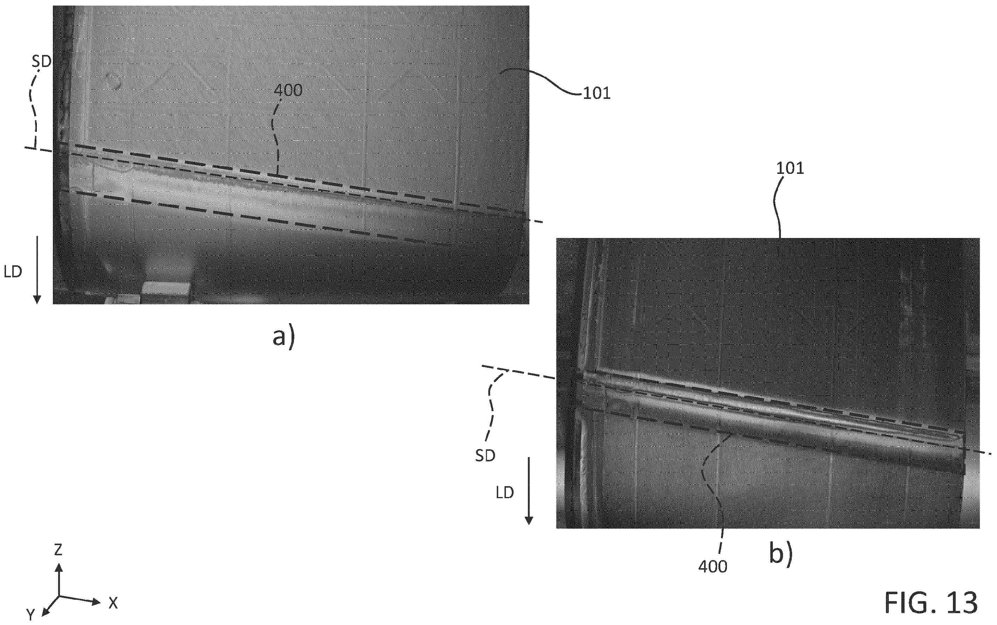

Figures 13a) and b) exemplarily show further polarized images, in different lighting conditions and, thus, with different contrasts, of portion **201** of the packaging web **101** wherein the splice **400** is shown; in particular, the polarized images have been processed by means of a DoLP algorithm.

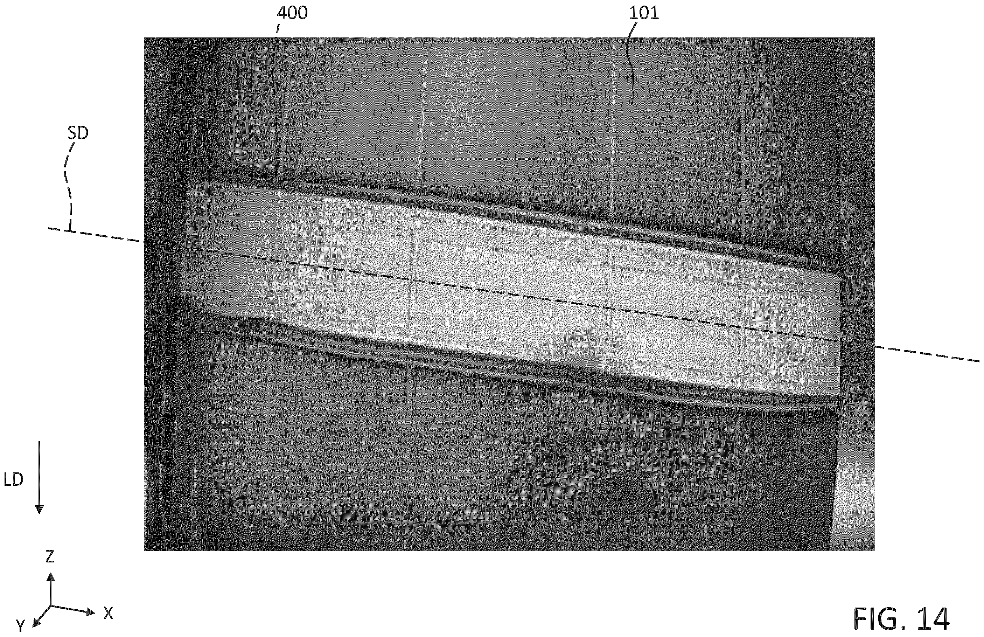

Figure 14 exemplarily show a polarized image of portion **201** of the packaging web **101** wherein the splice **400** is shown; in particular, the splice **400** is obtained in a converting factory (not shown). Even in this case, the polarized images have been processed by means of a DoLP algorithm.

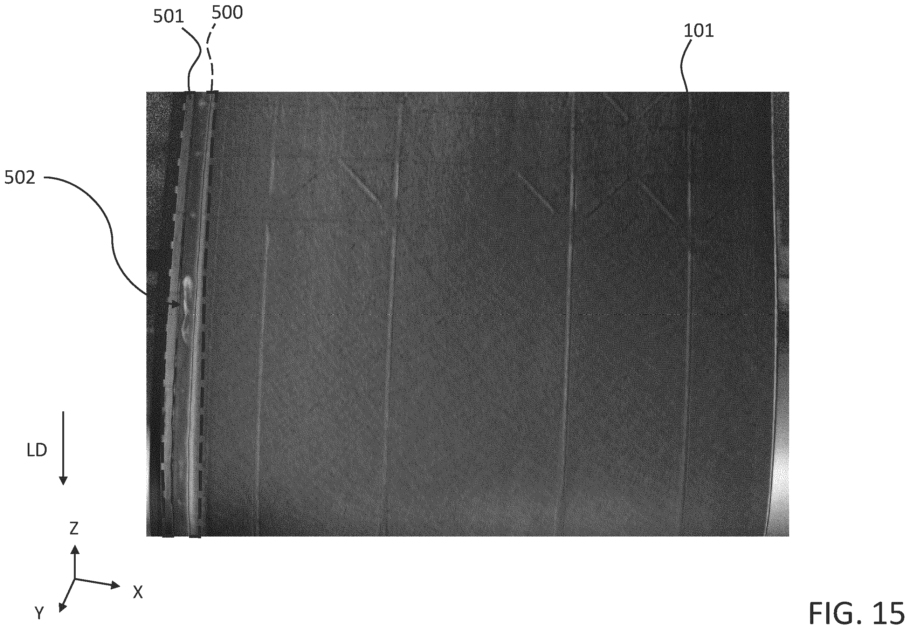

Figure 15 exemplarily show a polarized image of portion **201** of the packaging web **101** wherein the sealing strip **501** is shown; in particular, the polarized image has been processed by means of a DoLP algorithm. In this case, as shown in the polarized image, the sealing strip **501** presents anomalies, one shown in a lighter hue in Figure 15 and indicated with the reference number **502;** such anomaly **502,** whose presence is determined by the electronic processing resources **104,** may derive from, for instance, an incorrect sealing procedure of the sealing strip **501** to the packaging web **101.**

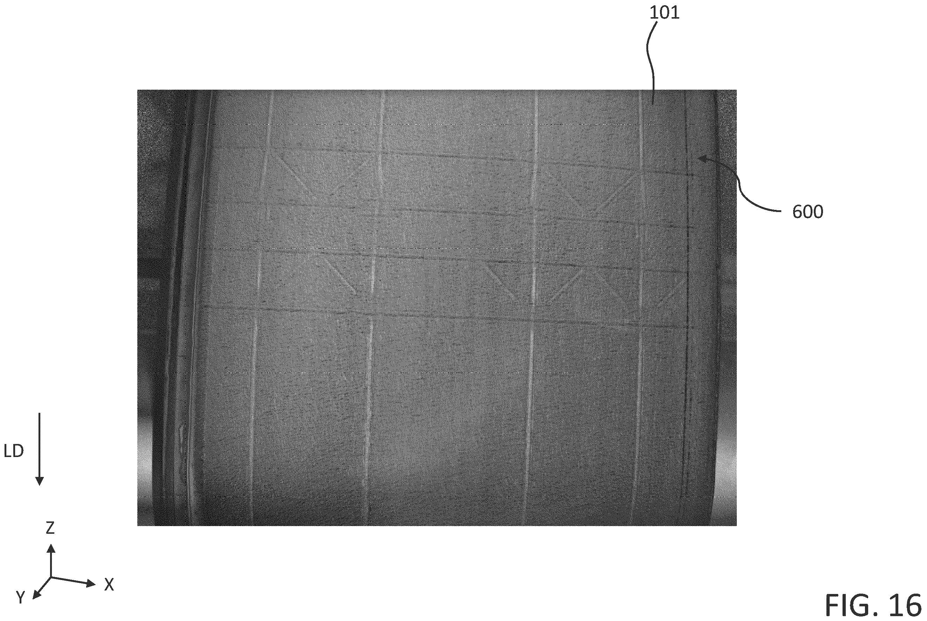

Figure 16 exemplarily shows a polarized image of portion **201** of the packaging web **101** wherein scratches **600,** obtained, for example, as a result of the interaction of the packaging web **101** with the rolls (for example, to allow advancing of the packaging web **101** along the feeding direction **FD**) of the packaging machine **200,** have been detected; in particular, the polarized image has been processed by means of a DoLP algorithm . In further detail, such scratches **600** are located along a longitudinal side of the packaging web **101,** *i.e.* extend along the longitudinal direction **LD.**

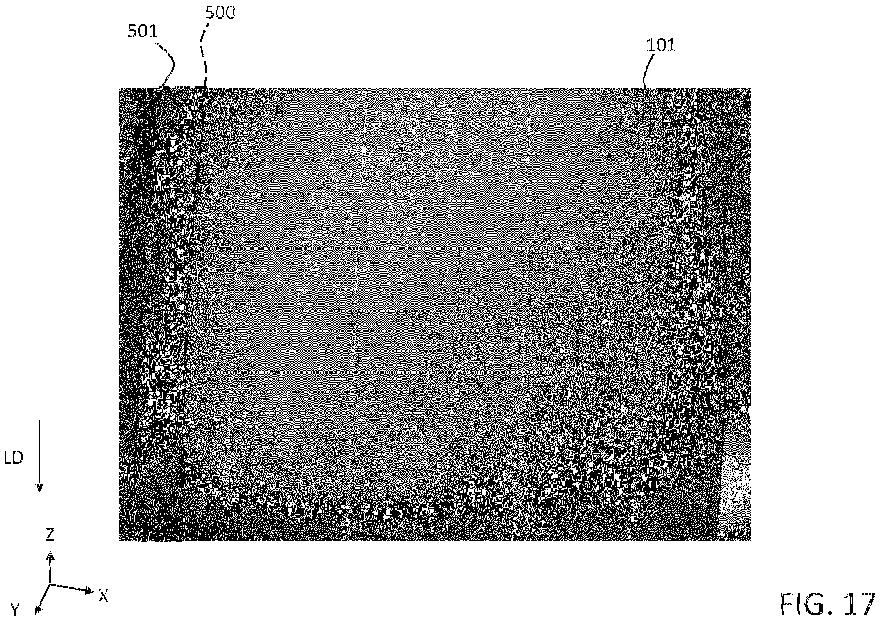

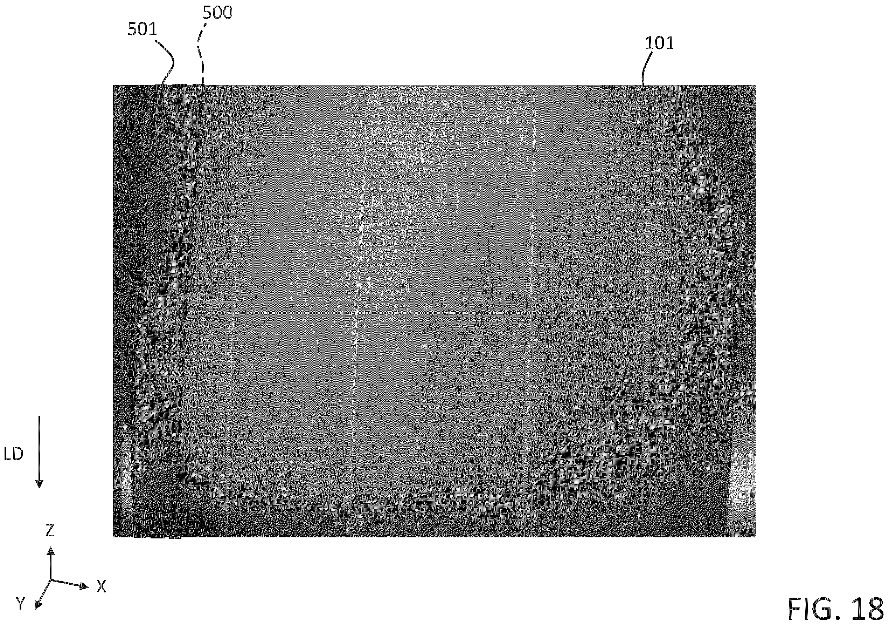

Figures 17 and 18 exemplarily show polarized images of portion **201** of the packaging web **101** wherein the sealing strip **501** is shown; in particular, the polarized image has been processed by means of a DoLP algorithm. In these cases, the sealing strip **501** is shown in a slightly darker hue with respect to the rest of the packaging web **101;** this is possibly a sign of the fact that there were errors in performing the heat-sealing of the sealing strip 501 on the packaging web **101,** in particular that the temperature of and/or the pressure applied by the heat-sealing means were not sufficient for the sealing strip **501** to be correctly sealed to the packaging web **101,** leading to a partial or full detachment of the sealing strip **501** from the same packaging web **101.**

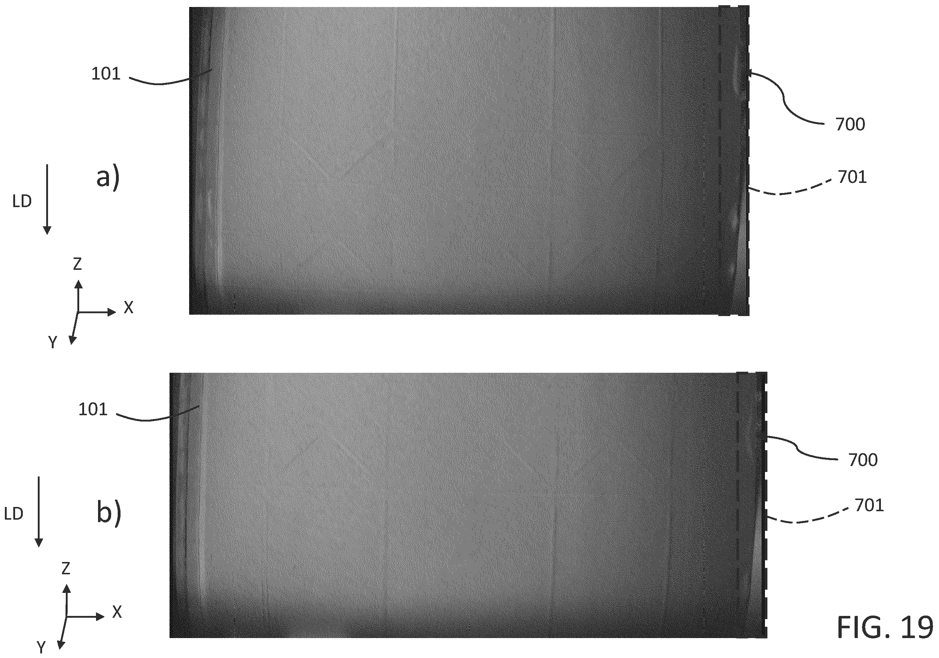

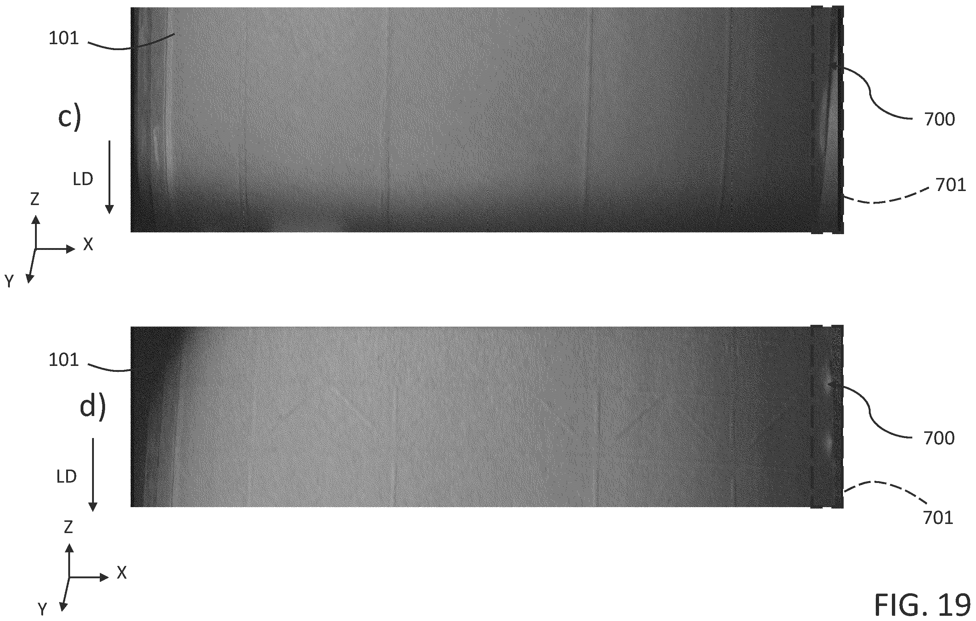

Figure 19a)-d) exemplarily shows respective polarized images of portion **201** of the packaging web **101** wherein edge defects **700** are shown; in particular, the packaging web **101** here has been subject of a further test in order to determine and evaluate any physical defect present in the packaging web **101,** *i.e.* determining the occurrence of anomalies, here edge defects **700,** and polarized images of the same have been acquired to verify if both the further test and the system **100** determined the occurrence of anomalies in the packaging web **101.**

It is noted that edge defects **700** are anomalies found at the edge portions, here referred to with the reference number **701,** of the packaging web **101,** and may be, for example, scratches, wrinkles or the like, for example deriving from the interaction of the packaging web **101** with the rolls and reels of the packaging machine **200** used for advancing the packaging web **101** along the feeding direction **FD** and/or to manipulate the same packaging web **101** to obtain the packages. The advantages that the present invention allows to achieve may be readily appreciated by the skilled person.

In particular, the present invention allows the quality of the packaging web, specifically in terms of quality of the splice and of the heat-sealing of the sealing strip, to be automatically checked by means of a simple yet robust and reliable artificial vision system and significantly improved compared to a quality check made by an appropriately trained operator.

Advantageously, thanks to the present invention, a quality and presence of a splice can be detected on the web before manipulation, *e.g*. by folding or sealing the packaging material.

Advantageously, the data relative to the splice may be logged and further analysis may be performed on the images. This may lead to more reliable quality checks and a more robust packaging machine.

In conclusion, from the description above follows that, although various embodiments of the invention have been described and shown, the invention is not restricted thereto, but may also be embodied in other ways within the scope of the subject-matter defined in the following claims.

## Claims

1. Method for detecting splices (**400**) in a packaging web (**101**) advancing along an advancement path (**FD**); the method comprising:
- capturing (**S300**), by an artificial vision system (**102**), images of the packaging web (**101**) as it advances along the advancement path (**FD**);
- processing (**S301**), by electronic processing resources (**104**) communicatively connected to the artificial vision system (**102**), the captured images to determine the occurrence of a splice (**400**) in the packaging web (**101**); and
- outputting (**S302**) data comprising information indicative of whether the splice (**400**) in the packaging web (**101**) advancing along the advancement path (**FD**) is present.

2. The method according to claim **1**, wherein the artificial vision system (**102**) comprises a camera with an integrated polarizer (**103**) and the step of capturing (**S300**) comprises capturing polarized images of the packaging web (**101**) by the camera with an integrated polarizer (**103**).

3. The method according to claim **2,** wherein the step of capturing (**S300**) further comprises capturing, by the camera with an integrated polarizer (**103**), a plurality of polarized images, each of which captured according to a respective polarization angle.

4. The method according to any one of claims **1-3,** wherein the step of processing (**S301**) comprises the step of executing, by the electronic processing resources (**104**), an algorithm so that the captured images are processed in order to determine one or more quantities related to each pixel of the captured images, preferably a degree of polarization or an angle of polarization.

5. The method according to any one of the preceding claims, wherein the step of processing (**S301**) further comprises the step of applying, by the electronic processing resources (**104**), a classification model to the captured images thereby classifying them according to one or more classes, indicative of the presence or absence of a splice (**400**) and/or a quality of the splice (**400**).

6. The method according to any one of the preceding claims, wherein, if a splice (**400**) in the packaging web (**101**) is determined to be present in the captured images, the method further comprises outputting (**S304**), by the electronic processing resources (**104**), data relative to the position of the splice (**400**) in the packaging web (**101**).

7. The method according to any one of the preceding claims, wherein the step of outputting (**S302**) comprises generating (**S303**), by the electronic processing resources (**102**), a notification comprising information indicative whether any splice (**400**) in the packaging web (**101**) is present, the notification referring to the presence of any splice (**400**) in the packaging web (**101**) and/or information relating to a position of the splice (**400**) in the packaging web (**101**).

8. The method according to any one of the preceding claims, wherein the step of capturing (**S300**) further comprises illuminating a side (**101A**) of the packaging web (**101**) with a light source (**110**) arranged at the side (**101A**) of the packaging web (**101**), the artificial vision system (**102**) being arranged at the side (**101A**) of the packaging web (**101**).

9. The method according to any one of the preceding claims, wherein the step of outputting (**S302**) further comprises outputting (**S305**) an identifier associated to a package to be formed from the packaging web (**101**).

10. The method according to any of the preceding claims, wherein the step of processing (**S301**) further comprises determining one or more quantities relating to the packaging web (**101**) based on the images captured by the artificial vision system (**102**),
and wherein the step of outputting (**S302**) further comprises outputting the one or more quantities relating to the packaging web (**101**).

11. The method according to any of the preceding claims, wherein the step of capturing (**S300**) images of the packaging web (**101**) comprises capturing images of an entire width of the packaging web (**101**).

12. System (**100**) for detecting splices (**400**) in a packaging web (**101**) advancing along an advancement path (**FD**); the system comprising:
- an artificial vision system (**102**) configured to capture (**S300**) images of the packaging web (**101**) as it advances along the advancement path (**FD**); and
- electronic processing resources (**104**) communicatively connected to the artificial vision system (**102**) and configured to:
o receive and process (**S301**) the captured images to determine the occurrence of a splice (**400**) in the packaging web (**101**); and
∘ output (**S302**) data comprising information indicative of whether the splice (**400**) in the packaging web (**101**) advancing along the advancement path (**FD**) is present.

13. The system according to claim **12,** wherein the artificial vision system (**102**) comprises a camera with an integrated polarizer (**103**) and, in order to capture (**S300**) images of the packaging web (**101**), configured to capture polarized images of the packaging web (**101**).

14. The system (**100**) according to claim **11** or **12** and further comprising a light source (**110**), preferably a polarized light source, arranged at a side (**101A**) of the packaging web (**101**) and configured to illuminate the side (**101A**) of the packaging web (**101**), the artificial vision system (**102**) capturing the light from the side (**101A**) of the packaging web (**101**).

15. Packaging machine (**200**) for forming packages from a packaging web (101); each packaging being filled with a pourable product,
wherein the packaging machine (**200**) is configured to communicate with a system (**100**) for detecting splices in a packaging web according to any one of claims **11-14** to allow detection of splices in the packaging web (**101**) used for forming the packages.

16. Computer program product loadable and executable by a system (**100**) for detecting splices in a packaging web (**101**) according to any one of claims **11-14** and configured to make, when executed, the system (**100**) to operate as according to a method for detecting splices in the packaging web (**101**) according to any one of claims **1-10.**
